# EUROPEAN PATENT SPECIFICATION

(11) **EP 1 139 699 B1**
(45) Date of publication and mention of the grant of the patent: **21.01.2004**
(21) Application number: 01830212.5
(22) Date of filing: 29.03.2001
(51) Int. Cl.: H05B 41/00, H05B 41/28, H05B 41/282, H05B 37/02

(54) **Arrangement for the suppression of current harmonics for electronic power supplies of compact fluorescent lamps**
Elektronisches Leuchtstofflampen-Vorschaltgerät, um harmonische Stromschwingungen zu unterbinden
Circuit de suppression des harmoniques de courant pour lampes fluorescentes

(30) Priority: 29.03.2000 IT FI000082
(43) Date of publication of application: 04.10.2001
(73) Proprietor: Dura Lamp S.p.A., Capalle, 50010 Campi Bisenzio (IT)
(72) Inventor: Pacini, Paolo, 50139 Firenze (IT)
(74) Representative: Bardini, Marco Luigi

(56) References cited:
- EP-A- 0 075 774
- FR-A- 2 665 322
- US-A- 4 700 111

## Description

The present invention relates to the illumination engineering field of lamp fabrication and in particular it relates to the fabrication of compact fluorescent lamps and related electronic power supplies. More specifically, the invention relates to an arrangement for the suppression of current harmonics for electronic power supplies of compact fluorescent lamps.

The electronic circuit of the invention allows to obtain a harmonic suppresser stage to be positioned before the traditional electronic power supply of fluorescent lamps, constituted by a few, low-cost components that can be inserted in a base of reduced dimensions such as the base of "compact" lamps, and thus to market this type of lamp, even for power ratings exceeding 25W.

European Standard EN 61000-3-2 prescribes a power threshold above 25W above which the lamps must absorb from the mains power supply a current with extremely low harmonics input, which means a nearly sinusoidal current wave. Regulations provide a table with the limits of the harmonics to be met for power ratings both below and above 25 W.

The limits imposed beyond 25W are very stringent and achievable, so far, with large electronic circuits, employing a relatively costly integrated chip and hence applicable only to power supplies for "linear" fluorescent lamps in which space and cost allow for it.

In "compact" fluorescent lamps, space for the electronic circuit to be inserted in the base is extremely limited and cost must be minimised. It is therefore not possible to adopt, for compact lamps, the same method employed in linear lamps.

The arrangement according to the invention solves this problem and provides a simple and inexpensive electronic circuit that can be inserted in the base of compact lamps and particularly suitable for power ratings above 25W.

The principle consists of exploiting a "service" voltage already generated by the traditional electronic power supply instead of producing it specifically for the purpose with a costly integrated chip.

This voltage is exploited in the invention to drive, with non intrusive drawing, a "boost" type converter pre-stage which approximates to a sinusoid the current absorbed from the mains power supply.

Essentially, a simply circuit is obtained, composed by low cost components, yet able to provide performance levels that comply with the aforementioned standards.

The important practical consequence that derives therefrom is that of being able to market compact fluorescent lamps with power ratings exceeding 25W and hence able to generate an extraordinary luminous flux for a compact source, already provided in itself with high energy savings capabilities.

By way of example, 30W compact lamps have been obtained, able to provide, after 100 hours of operation, a luminous flux of 2000 lumen, equalling the one achievable with a good 150W incandescent light bulb.

Because of the considerations described above, the introduction of the power factor corrector is currently possible, as well as mandatory, only in power supplies for linear fluorescent lamps, but so far not for compact ones. Manufacturers of compact fluorescent lamps do not provide, in their catalogues, lamps with power ratings exceeding 25 W due to the impossibility of inserting an economical and small power factor corrector in a limited space such as the one inside the base of said lamps.

Insofar as it was possible to investigate, economical systems on this issue have already been studied, but they solve the problem only for low powers, where in practice they would not be necessary.

The sought aim instead is amply achieved with the method described above, particularly well suited for powers above 25W.

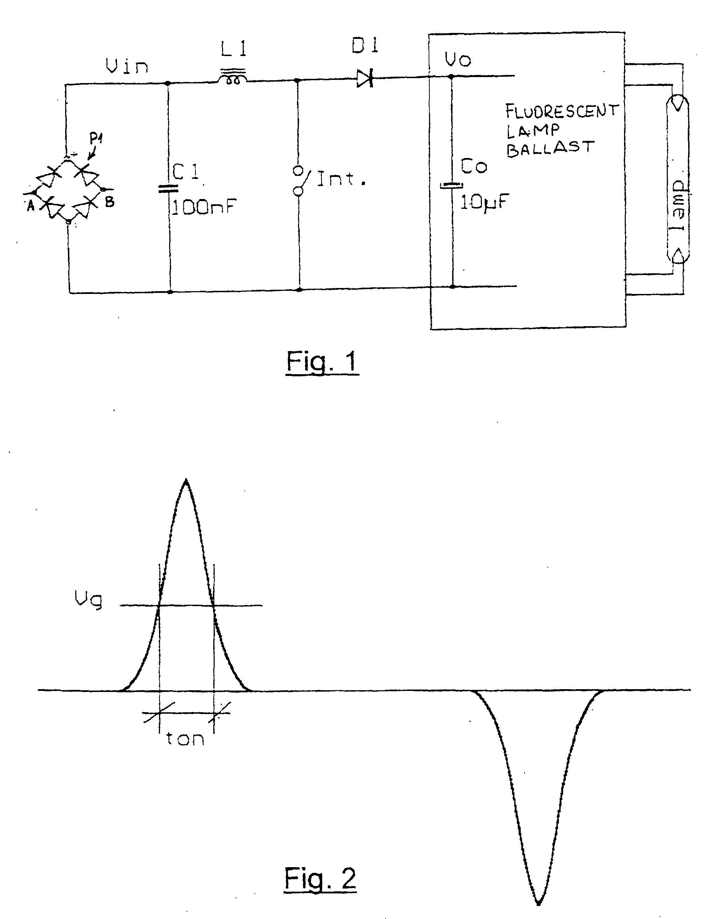

As is well known, traditional harmonics suppressers are power factor correctors obtained by placing a fly-back converter, usually in "boost" version, before the lamp power supply circuit (Figure 1).

Therein the large smoothing capacitor Co, positioned after the rectifier bridge, is recharged a great number of times within each voltage semi-period, instead of only once in correspondence with voltage peaks. In fact, such impulsive current demands are the ones that cause harmonics.

In order to charge Co continually, even when the voltage sinusoid is lower than the direct voltage Vo present at its ends, it is necessary to generate an additional voltage that is added to the input voltage Vin, so that total voltage always exceeds Vo.

The additional voltage is obtained from an inductance L1 positioned in series after the rectifier bridge, which inductance is connected to ground through a switch (Fig. 1).

As long as the switch remains closed, a current flows through L1 which is charged with magnetic energy.

When the switch opens, L1 discharges the accumulated magnetic energy creating a self-induction voltage of opposite direction which is added to the input voltage and has such amplitude as to always exceed direct voltage Vo.

Thus, every time the switch opens, the diode D1 starts conducting and a current coming from L1 recharges Co.

The closure time of switch, tₒₙ, is imposed by the command of the electronic switch.

The discharge time t_{off} depends on the maximum current reached during tₒₙ, on the inductance L1 and on the difference between the smoothed direct current Vo and the amplitude of the input voltage.

In traditional power factor correctors, the switch is commanded by an appropriate microchip that modulates closure times in such a way as to maintain the output voltage always constant and the input current in a shape approaching a sinusoid as closely as possible.

The present invention shall now be described in reference to a currently preferred embodiment, provided purely by way of non limiting example according to the enunciation of the enclosed claims, and with reference to the figures of the accompanying drawings, in which:
- Figure 1 shows the generic diagram of a classic "boost" type converter;
- Figure 2 shows a typical waveform for driving the switch of a "boost" type converter as shown in Figure 1;
- Figure 3 shows the general principle diagram of a "boost" type converter and power supply for a fluorescent lamp;
- Figure 4 shows the current profile in the "boost" type converter;
- Figure 5 shows the current profile in a "boost" type converter within a half-period of the alternating current power supply voltage, according to the invention;
- Figure 6 shows a mode for controlling the switching time of a "boost" type converter according to the invention;
- Figure 7 shows a first embodiment of a power supply system with harmonic attenuation/suppression according to the invention; and
- Figure 8 shows a variation of the power supply system shown in Figure 7.

According to the invention, the starting concept is that the lamp power supply already produces a voltage that can be usefully employed to drive the switch and equally correct the power factor, even though output voltage stabilisation with load variations is not achieved. But, since the load is always the same, Vo remains stable.

The driving voltage employed is the very same voltage that commands the switching of the two transistors used in the traditional power supply to generate the lamp current and its profile is shown in Figure 2.

As can be observed, the shape is, in itself, very steep and able to drive an electronic switch (tₒₙ).

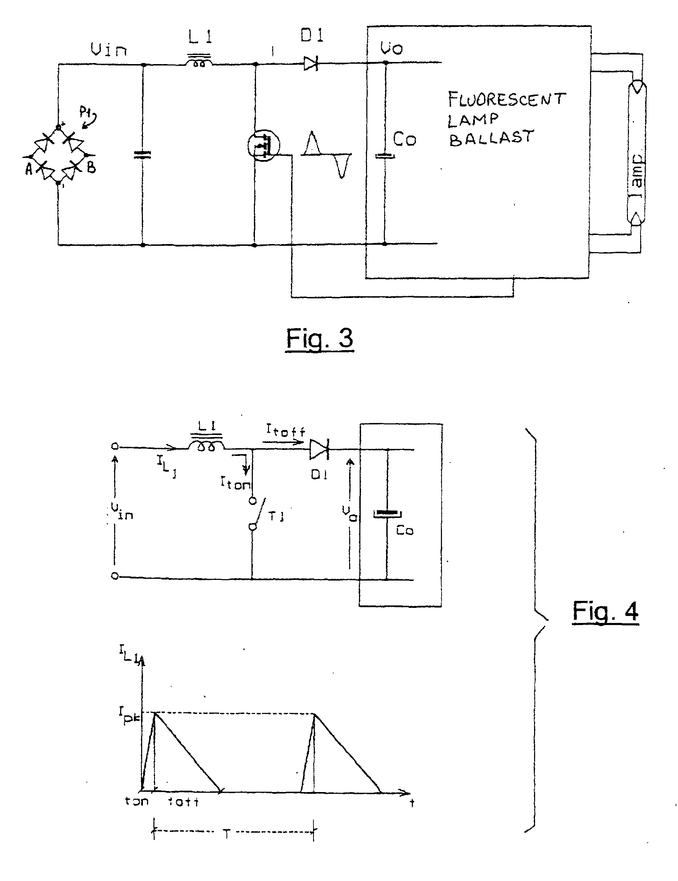

Moreover, in order for the drawing of this driver signal not to disturb the regular operation of the power supply, a MOSFET transistor is used as a switch: such transistors are, as is well known, voltage-driven without current absorption (Fig. 3).

The frequency of the driving alternating voltage is generally around 40 kHz and hence it commands the recharging of Co 400 times in a period (the period of the half-waves is 100 Hz).

The input capacitor, C1, of low value, filters the 40 kHz component and the absorbed input current becomes sinusoidal.

The current that flows through the MOSFET switch rises almost linearly starting from zero, being limited by L1, and reaches a maximum value indicated as Ipk.

When the switch opens, the inductance is flowed through by a current which, through D1 recharges Co, and has decreasing linear profile reaching down to zero (Fig. 4).

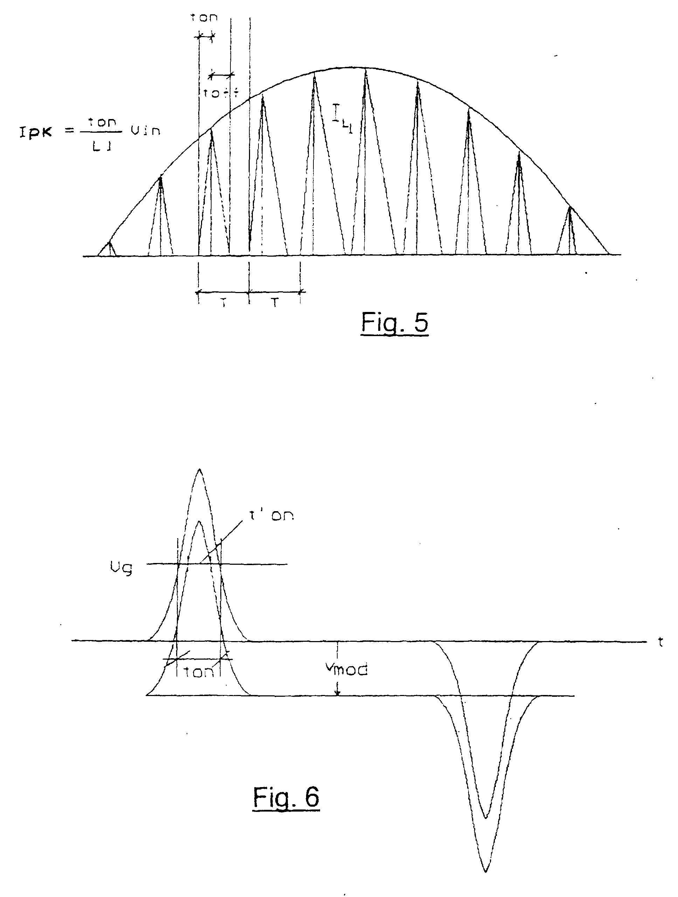

The maximum value reached by the current Ipk is not fixed, but varies following a sinusoidal profile during each half-wave (Fig. 5).

The power factor achievable with this circuit, to maintain the value of Ipk low enough for the MOSFET not to have to dissipate excess power, is about 0.95 still not sufficient to contain current harmonics below the values set out by European standards.

The reason lies in the insufficiency of the self-induction voltage produced by L1 when input voltage Vin approaches zero and consequently the current charging Co is interrupted.

According to the present invention, a modification must be introduced which consists of "modulating" the intervention of the power factor corrector in such a way as to contain the effect when the voltage of each half-wave is maximum and enhance it when it is minimum.

This is obtained by exploiting the triangular shape of the driving voltage. The gate voltage Vg that brings the MOSFET to conduct is around 3.5 - 4 V. If the triangular driving voltage is moved upwards or downwards, the gate threshold of the MOSFET is intercepted for a longer or shorter period, thereby modulating current amplitude within each half wave with the effect of improving the power factor (Fig. 6).

The modulating voltage must be negative, maximum when the half wave is maximum in order to reduce tₒₙ and minimum when the half wave is near zero so that tₒₙ is maximum.

Since Ipk = ( tₒₙ x Vᵢₙ ) / L1, by increasing tₒₙ the current and, therewith, the additional self-induction voltage Vs = L₁ di / dt, are also increased.

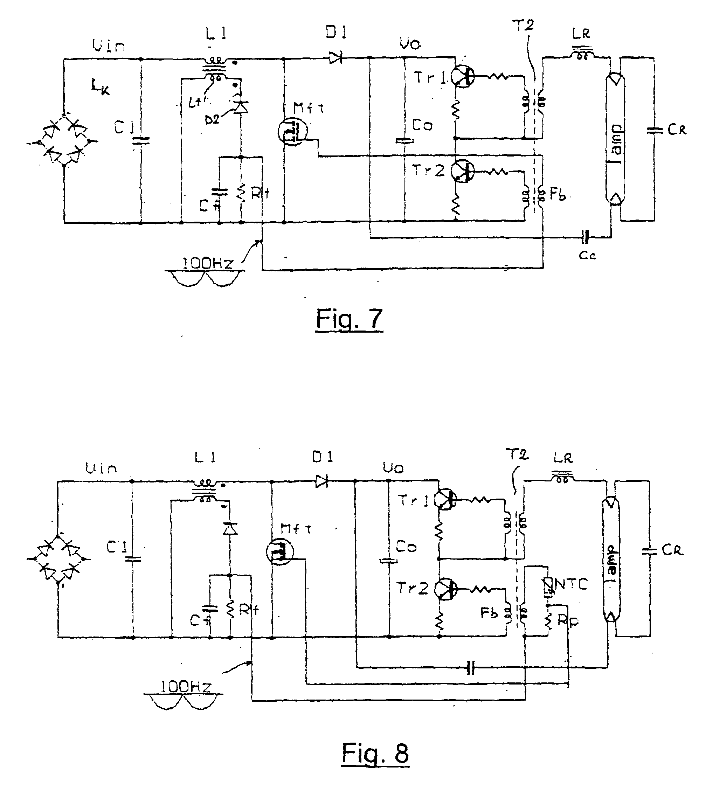

The modulating voltage is obtained by rectifying with the diode D2 a voltage obtained from a secondary winding L1' on L1 (Fig. 7).

This modulating voltage is obtained on the anode of the diode D2 and it is filtered (at 40 kHz) by the RC group formed by the capacitor Cf and by the resistor Rf. This voltage passes through the winding Fb of the transformer T2 comprised in the power supply of the fluorescent lamp previously mentioned in reference to Figures 1 and 3.

The power supply shall be illustrated schematically, being a known circuit design that comprises two transistors TR1, TR2, an inductance LR that supplies power to the lamp in parallel whereto is positioned a capacitor CR, and which is coupled to the cathode of the diode D1 through a coupling capacitor CC.

It should be noted that the winding Fb of the transformer T2 supplies the driving voltage of the Mft transistor/switch of the boost converter.

It should also be noted that the profile of the voltage on the anode of the diode D2 is a voltage pulsating at 100 Hz (see Figures 7 and 8). This "slowly varying" voltage will modulate the working point of the switch transistor Mft (see Figures 5, 6, 7, 8) to cause the transistor Mft to be brought to conduct for a longer time when instantaneous mains voltage is lower (within a half-sinusoid), and for a shorter time when instantaneous mains voltage is higher (in proximity to the peak).

In other words, by way of illustration one could say that Vmod (Figure 6) is substantially cosinusoidal (in terms of absolute value) relative to the sinusoidal mains voltage.

Reference is now made to Figure 8.

The feedback transformer T2 contained in the power supply is usually wound on a toroidal ferrite core which is brought to saturation by the lamp current flowing through the primary winding.

Unfortunately the maximum saturation induction Bₛₐₜ of such materials significantly depends on temperature, so that the amplitude of the driving voltage is subject to its influence and as temperature inside the lamp base increases, it causes Vo to be reduced. Consequently, as temperature increases the power absorbed by the lamp decreases.

In order to compensate for power drift in an economical but effective manner, it was necessary to employ a resistive divider on the secondary winding of the feedback transformer T2, constituted by an NTC (Negative Temperature Coefficient) resistor and a divider resistor Rp.

As temperature increases, the NTC resistance decreases and the modulating voltage increases, which in turn causes the time tₒₙ to be increased, and Vo therewith. The power absorbed by the lamp is thereby stabilised.

Lastly, it should be stressed that this economical system for obtaining a harmonic suppresser also allows to obtain a direct voltage Vo (rail voltage) that can be defined at will by appropriately selecting the values of the components, and to have available a sufficiently high value, no longer limited to the peak value of the input voltage and thus such as to be able to supply power to the most powerful lamps.

This aspect has not been noted in the low cost harmonic suppressers we were able to examine, and which are thus not suitable for greater power ratings.

More specifically, the direct voltage obtainable from a mains power supply at 220 Veff is 220 x 1.41 = 310 V. More powerful lamps are constructed with a greater overall length of the fluorescent tube, and thus need a higher lamp voltage. For instance, a 30 W lamp needs a voltage with about 200V amplitude. Since the voltage Vo must have twice the amplitude of the lamp voltage, it will have to be 400V.

This high voltage can be obtained thanks to the boost type converter like the one adopted, which has the characteristic of elevating input voltage.

To summarise, from the above description it is readily understood that, in addition to the idea of economising by exploiting resources already provided by the traditional circuit of the power supply itself to obtain a harmonic suppresser stage, the way of employing this driving voltage is also important to reach an effective operation, able to comply with harmonics Standards, and constitutes the second aspect of the invention.

The devised design yields the following results:
- The suppresser stage is driven by drawing, which does not in the least disturb the operation of the lamp.
- It exploits in an original manner the particular triangular shape of this driving voltage, to calibrate the harmonics-reduction intervention during each half-wave of the mains voltage, in order to optimise its effectiveness.
- It generates a greater direct voltage (rail voltage) than the one obtainable from a traditional circuit, which makes the method of the invention particularly suitable for lamps of greater power, i.e. in the range of power ratings of interest to us.
- Lastly, it is provided with an economical system for stabilising the power of the lamp according to temperature drift.

## Claims

1. An arrangement for suppressing current harmonics for electronic power supplies of compact fluorescent lamps of the kind comprising a "boost" type power supply circuit that includes a bridge rectifier powering in succession an inductance (L1) for accumulating magnetic energy connected to a switch (Int, Mft) that can be driven to conduct to ground, followed by a diode (D1) and an accumulation capacitor Co, followed by a conventional power supply for fluorescent lamp, **characterised in that** said switch is a semiconductor switch having a control electrode that is voltage-driven at a higher frequency than mains frequency and having a predefined conduction threshold; the driving voltage of said switch (Int, Mft) being drawn from said fluorescent lamp power supply; the conduction period of said switch (Int, Mft) being modulated as a function of the rectified sinusoid of the mains voltage in such a way as to conduct for a longer time in correspondence with low instantaneous values of the rectified sinusoid and for a shorter time in correspondence with high instantaneous values of the rectified sinusoid.

2. An arrangement as claimed in claim 1, **characterised in that** the driving voltage of said switch (Int, Mft) comprises a high frequency component obtained from a winding of a transformer contained in said power supply of the fluorescent lamp, whereto is superposed a modulating voltage at mains frequency with substantially cosinusoidal profile (in terms of absolute value) relative to the mains power supply sinusoid.

3. An arrangement as claimed in claim 2, **characterised in that** said modulating voltage is obtained from an auxiliary winding (L1') of said inductance (L1) and rectified by means of a diode (D2).

4. An arrangement as claimed in claim 3, **characterised in that** said modulating voltage is modified through a divider formed by a resistor variable as a function of temperature (NTC) and a resistor (Rp) in order to stabilise the operation of the system as a function of temperature.

## Patentansprüche

1. Anordnung zum Unterbinden von harmonischen Stromschwingungen für elektronische Leistungsversorgungen von Kompaktfluoreszenzlampen der Art, die eine "Aufladungs"Typ-- Leistungsversorgungsschaltung enthält, die einen Brükkengleichrichter enthält, der in Folge eine Induktanz (L1) zum Akkumulieren magnetischer Energie, verbunden mit einem Schalter (Int, Mft), der betrieben werden kann, um zur Erdung zu leiten, gefolgt von einer Diode (D1) und einem Akkumulationskondensator (Co), gefolgt von einer herkömmlichen Leistungsversorgung für eine Fluoreszenzlampe, betreibt, **dadurch gekennzeichnet, daß** der Schalter ein Halbleiterschalter ist, der eine Steuerelektrode hat, die bei einer höheren Frequenz als der Starkstromfrequenz spannungsbetrieben ist und einen vorgegebenen Leitungsschwellenwert hat; die Betriebsspannung des Schalters (Int, Mft) von der Fluoreszenzlampenleistungsversorgung gezogen wird; die Leitungsperiode des Schalters (Int, Mft) als eine Funktion der gleichgerichteten Sinuswelle der Starkstromspannung in einer solchen Weise moduliert wird, um für eine längere Zeit entsprechend niedrigen augenblicklichen Werten der gleichgerichteten Sinuswelle und für eine kürze Zeit entsprechend hohen augenblicklichen Werten der gleichgerichteten Sinuswelle zu leiten.

2. Anordnung nach Anspruch 1, **dadurch gekennzeichnet, daß** die Betriebsspannung des Schalters (Int, Mft) eine Hochfrequenzkomponente enthält, die von einer Wicklung eines Transformators erhalten wird, der in der Leistungsversorgung der Fluoreszenzlampe enthalten ist, worauf eine Modulierspannung bei Starkstromfrequenz mit im Wesentlichen Cosinusprofil (in Ausdrücken des Absolutwertes) relativ zu der Starkstromleistungsversorgungssinuswelle überlagert ist.

3. Anordnung nach Anspruch 2, **dadurch gekennzeichnet, daß** die Modulierspannung von einer Hilfswicklung (L1') der Induktanz (L1) und gleichgerichtet mittels einer Diode (D2) erhalten wird.

4. Anordung nach Anspruch 3, **dadurch gekennzeichnet, daß** die Modulierspannung durch einen Teiler modifiziert wird, der durch einen temperaturfunktionsvariablen Widerstand (NTC) und einen Widerstand (Rp) gebildet ist, um die Operation des Systems als eine Funktion der Temperatur zu stabilisieren.

## Revendications

1. Un circuit de suppression des harmoniques de courant pour lampes fluorescentes compactes, du type comprenant un circuit d'alimentation en énergie de type "suralimenté", qui comprend un redresseur en pont alimentant, en succession, une inductance (L1) pour accumuler de l'énergie magnétique connectée à un interrupteur (Int, Mft) qui peut être piloté pour conduire à la masse, suivie d'une diode (D1) et d'une capacité d'accumulation Co, suivies d'une alimentation en énergie conventionnelle pour lampe fluorescente, **caractérisé en ce que** ledit interrupteur est un interrupteur semi-conducteur ayant une électrode de contrôle qui est pilotée en tension à une fréquence supérieure à la fréquence du secteur et ayant un seuil de conduction prédéterminé ; la tension de pilotage du dit interrupteur (Int, Mft) étant prélevée sur ladite alimentation en énergie de la lampe fluorescente ; la période de conduction du dit interrupteur (Int, Mft) étant modulée en fonction d'une sinusoïde redressée de la tension du secteur de façon à conduire pendant une durée plus longue en correspondance avec la valeur minimum instantanée de la sinusoïde redressée et pendant une durée plus courte en correspondance avec la valeur maximum instantanée de la sinusoïde redressée.

2. Un circuit selon la revendication 1, **caractérisé en ce que** la tension de pilotage du dit interrupteur (Int, Mft) comprend une composante haute fréquence obtenue à partir d'un enroulement d'un transformateur appartenant à l'alimentation en énergie de la lampe fluorescente, à laquelle est superposée une tension de modulation à la fréquence du secteur avec un profil sensiblement cosinusoïdal (en terme de valeur absolue) par rapport à la sinusoïde de l'alimentation en énergie du secteur.

3. Un circuit selon la revendication 2, **caractérisé en ce que** ladite tension de modulation est obtenue à partir d'un enroulement auxiliaire (L1') de ladite inductance (L1) et redressée au moyen d'une diode (D2).

4. Un circuit selon la revendication 3, **caractérisé en ce que** ladite tension de modulation est modifiée à travers un diviseur formé d'une résistance variable en fonction de la température (NTC) et d'une résistance (Rp) dans le but de stabiliser le fonctionnement du système en fonction de la température.
